# FASCICULE DE BREVET EUROPEEN

(11) **EP 3 541 658 B1**
(45) Date de publication et mention de la délivrance du brevet: **21.04.2021**
(21) Numéro de dépôt: 17804250.3
(22) Date de dépôt: 14.11.2017
(51) Int. Cl.: B60P 7/135

(54) **SYSTÈME DE CALAGE**
SICHERUNGSSYSTEM
SECURING SYSTEM

(30) Priorité: 15.11.2016 FR 1661042
(43) Date de publication de la demande: 25.09.2019
(73) Titulaire: Commissariat à l'énergie atomique et aux énergies alternatives, 75015 Paris (FR); DCNS, 75015 Paris (FR)
(72) Inventeur: MARTIN, Pascal, 38100 Grenoble (FR); CARMINATI, Jean-Noël, 73100 Aix-les-Bains (FR)
(74) Mandataire: Cabinet Beaumont
(86) Numéro de dépôt international: PCT/FR2017/053112
(87) Numéro de publication internationale: WO 2018/091816

(56) Documents cités:
- DE-A1- 2 916 165
- DE-A1- 19 806 706
- FR-A- 386 189

## Description

### Domaine

La présente demande concerne un système de calage comprenant plusieurs dispositifs de calage conformément à la revendication 1 et un procédé de calage conformément à la revendication 17.

### Exposé de l'art antérieur

Pour certaines applications, il est souhaitable de caler des charges, par exemple des caisses, des containers ou des batteries d'accumulateurs, en particulier lorsque les charges sont disposées dans un véhicule, par exemple un navire, un avion, un train, un camion, etc. Dans ce but, des dispositifs de calage sont intercalés entre les charges et un élément de référence, par exemple un plafond ou un mur.

De façon générale, il est souhaitable que l'encombrement du dispositif de calage soit faible et que le montage et le démontage du dispositif de calage soient simples. De plus, le dispositif de calage doit pouvoir être démonté même après une longue durée d'utilisation. Il faut donc que le fonctionnement du dispositif de calage soit fiable et que le risque de blocage du dispositif de calage, par exemple suite à la corrosion de pièces mécaniques, soit faible.

En outre, pour certaines applications, en particulier lorsque les charges sont réparties dans une enceinte en couches empilées les unes sur les autres et remplissent sensiblement complètement l'enceinte, les dispositifs de calage qui sont insérés entre la couche de charges au sommet de l'empilement et le plafond de l'enceinte doivent satisfaire des contraintes supplémentaires. En effet, le dispositif de calage doit être compact pour pouvoir être inséré dans cet espace confiné. De plus, l'étroitesse de l'espace où sont disposés les dispositifs de calage entre la couche de charges au sommet de l'empilement et le plafond de l'enceinte, qui a par exemple une hauteur d'une quinzaine de centimètres, peut empêcher l'utilisation d'outils, pour la mise en place des dispositifs de calage, dont la manipulation requiert de l'espace, comme par exemple une masse. En outre, il faut pouvoir actionner certains dispositifs de calage qui ne sont pas à portée de mains d'un opérateur. De plus, il faut que l'effort de calage exercé par le dispositif de calage ne dépasse pas un seuil pour ne pas abîmer les charges. En outre, il faut que le dispositif de calage puisse recevoir un effort de compression important en cas de chocs.

DE 198 06 706 A1 divulgue un système de calage comprenant plusieurs dispositifs de calage.

### Résumé

Un objet d'un mode de réalisation est de pallier tout ou partie des inconvénients des dispositifs de calage décrits précédemment.

Un autre objet d'un mode de réalisation est que le dispositif de calage est compact.

Un autre objet d'un mode de réalisation est que le dispositif de calage ne comprend que des pièces mécaniques.

Un autre objet d'un mode de réalisation est que le dispositif de calage peut être actionné par une commande déportée.

Un autre objet d'un mode de réalisation est que plusieurs dispositifs de calage peuvent être actionnés par la même commande.

Un autre objet d'un mode de réalisation est que le dispositif de calage est réutilisable.

Ainsi, un mode de réalisation prévoit un système de calage comprenant plusieurs dispositifs de calage, chaque dispositif de calage comprenant une vis sans fin coopérant avec une roue dentée, un écrou relié à la roue dentée et comprenant une première ouverture au moins en partie filetée, une tige au moins en partie filetée coopérant avec la première ouverture, un plateau relié à la tige et un mécanisme de limitation de couple entre la roue et l'écrou ou entre un arbre d'entraînement et la vis sans fin, dans lequel les vis sans fin des dispositifs de calage sont entraînées en rotation simultanément par un mécanisme d'entraînement.

Selon un mode de réalisation, pour chaque dispositif de calage, la vis sans fin est adaptée à être entraînée dans un premier sens de rotation, d'où il résulte un déplacement du plateau dans une première direction, et est adaptée à être entraînée dans un deuxième sens de rotation opposé au premier sens de rotation, d'où il résulte un déplacement du plateau dans une deuxième direction opposée à la première direction.

Selon un mode de réalisation, pour chaque dispositif de calage, le mécanisme de limitation de couple est adapté pour transmettre un premier moment à l'écrou lorsque la vis sans fin est entraînée dans le premier sens de rotation par un deuxième moment et pour transmettre un troisième moment à l'écrou lorsque la vis sans fin est entraînée dans le deuxième sens de rotation par un quatrième moment, l'intensité en valeur absolue du deuxième moment étant supérieure à l'intensité en valeur absolue du premier moment pour une même intensité en valeur absolue des deuxième et troisième moments.

Selon un mode de réalisation, pour chaque dispositif de calage, la tige est adaptée pour se désolidariser de l'écrou lorsque le plateau est déplacé dans la deuxième direction au-delà d'une position donnée.

Selon un mode de réalisation, pour chaque dispositif de calage, la tige est adaptée pour coopérer à nouveau avec l'écrou après que le plateau a été déplacé dans la deuxième direction au-delà de la position donnée lorsque la vis sans fin est entraînée dans le premier sens de rotation.

Selon un mode de réalisation, chaque dispositif de calage comprend une pièce formant une liaison glissière avec la tige.

Selon un mode de réalisation, la liaison entre la vis sans fin et la roue dentée et/ou entre la tige et l'écrou est une liaison irréversible.

Selon un mode de réalisation, le mécanisme de limitation de couple comprend un crabot entraîné en rotation par l'arbre d'entraînement et comprenant des première dents et la vis sans fin comprend, sur un côté, des deuxièmes dents, complémentaires des premières dents, les deuxièmes dents étant adaptées à glisser sur les premières dents dans un sens de rotation lorsque le couple résistif de la vis sans fin est supérieur à un seuil.

Selon un mode de réalisation, le dispositif comprend un premier ressort exerçant en permanence une poussée sur le crabot contre la vis sans fin.

Selon un mode de réalisation, la roue comprend une première denture coopérant avec la vis sans fin et est traversée par une deuxième ouverture comprenant une deuxième denture, l'écrou s'étendant dans la deuxième ouverture, le mécanisme de limitation de couple comprenant des doigts disposés radialement par rapport à l'écrou, chaque doigt comprenant des troisièmes dents, complémentaires de la deuxième denture, les troisièmes dents étant adaptées à glisser sur la deuxième denture dans un sens de rotation lorsque le couple résistif de l'écrou est supérieur à un seuil.

Selon un mode de réalisation, le dispositif comprend, pour chaque doigt, au moins un deuxième ressort exerçant en permanence une poussée sur le doigt contre la deuxième denture.

Selon un mode de réalisation, la première ouverture comprend une première portion filetée et une deuxième portion non filetée et la tige comprend une troisième portion filetée et une quatrième portion non filetée, et la troisième portion filetée n'engrène plus avec la première portion filetée lorsque le plateau est au plus proche de l'écrou.

Selon un mode de réalisation, le dispositif comprend un troisième ressort exerçant en permanence une poussée sur la tige.

Selon un mode de réalisation, le dispositif comprend un pied et une alternance de premiers et deuxièmes disques, chaque premier disque étant solidaire en rotation du pied et chaque deuxième disque étant solidaire en rotation de l'écrou, les premiers disques étant adaptés à venir au contact des deuxièmes disques lorsque le plateau rencontre un obstacle.

Un mode de réalisation prévoit également un système de calage comprenant plusieurs dispositifs de calage tels que définis précédemment.

Selon un mode de réalisation, les vis sans fin des dispositifs de calage sont entraînées en rotation simultanément par un mécanisme d'entraînement.

Selon un mode de réalisation, au moins deux des dispositifs de calage sont reliés l'un à l'autre par une liaison rigide.

Selon un mode de réalisation, tous les dispositifs de calage sont reliés les uns aux autres par des liaisons rigides.

Un mode de réalisation prévoit également un procédé de calage de charges comprenant la mise en place du système de calage tel que défini précédemment entre les charges et une paroi et l'actionnement simultané des dispositifs de calage jusqu'à ce que le plateau de chaque dispositif de calage vienne au contact de la paroi.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1 et 2 sont des vues de côté, partielles et schématiques, d'un ensemble de charges maintenues par des systèmes de calage ;
la figure 3 est une vue en perspective d'un mode de réalisation d'un système de calage comprenant plusieurs dispositifs de calage ;
les figures 4 et 5 sont respectivement une vue de dessus et une vue de côté, partielles et schématiques, du système de calage représenté en figure 3 qui en illustrent le fonctionnement ;
la figure 6 est une vue analogue à la figure 5 dans le cas où les jeux rattrapés par les dispositifs de calage sont différents ;
les figures 7 et 8 sont respectivement une vue éclatée en perspective et une vue latérale avec coupe d'un mode de réalisation de l'un des dispositifs de calage du système de calage représenté en figure 3 ;
les figures 9 à 11 sont respectivement une vue éclatée en perspective, une vue latérale avec coupe et une vue de dessus avec coupe d'un autre mode de réalisation de l'un des dispositifs de calage du système de calage représenté en figure 3 ;
la figure 12 est une vue de détail de la figure 11 ;
les figures 13 et 14 sont respectivement une vue analogue à la figure 12 et vue latérale avec coupe d'un autre mode de réalisation de l'un des dispositifs de calage du système de calage représenté en figure 3 ; et
les figures 15 et 16 sont des vues en perspective de pièces mécaniques du dispositif de calage représenté en figure 14.

### Description détaillée

De mêmes éléments ont été désignés par de mêmes références aux différentes figures. Par souci de clarté, seuls les éléments qui sont utiles à la compréhension des modes de réalisation décrits ont été représentés et sont détaillés. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à un dispositif de calage dans une position normale d'utilisation. Sauf précision contraire, les expressions "approximativement", "sensiblement", et "de l'ordre de" signifient à 10 % près, de préférence à 5 % près.

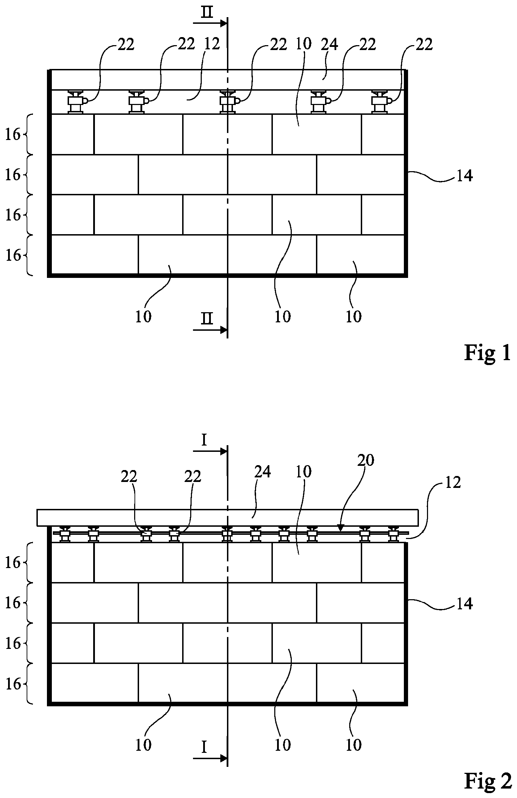

Les figures 1 et 2 sont des vues de côté, partielles et schématiques, selon deux directions perpendiculaires, d'un ensemble de charges 10 disposées dans une enceinte 12 délimitée par un bâti 14 et réparties en couches 16 horizontales empilées les unes sur les autres, chaque couche 16 comprenant des charges 10 disposées les unes à côté des autres. A titre d'exemple, quatre couches 16 sont représentées en figure 1. Les charges 10 correspondent, par exemple, à des caisses, des containers ou à des batteries d'accumulateurs. Des systèmes de calage 20, comprenant chacun une file de dispositifs de calage 22 reliés entre eux, sont intercalés entre les charges 10 de la couche 16 au sommet de l'empilement et le plafond 24 de l'enceinte 12.

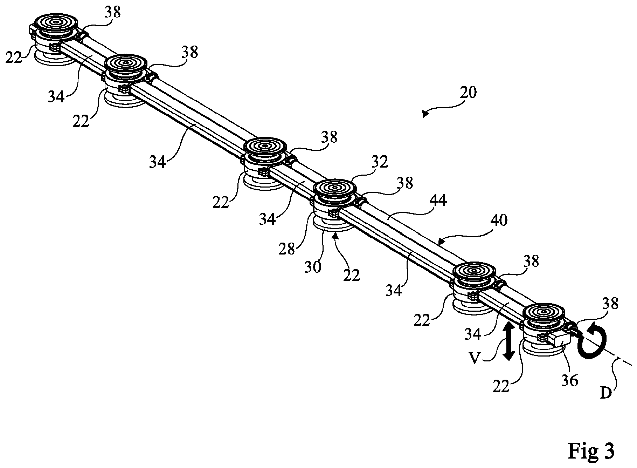

La figure 3 est une vue en perspective d'un mode de réalisation du système de calage 20. Le système de calage 20 comprend plusieurs dispositifs de calage 22. Chaque dispositif de calage 22 comprend un boîtier 28 reposant sur un pied 30, le boîtier 28 contenant un mécanisme de vérin mécanique adapté à déplacer un plateau 32 selon une direction V dans les deux sens.

Dans le présent mode de réalisation, chaque dispositif de calage 22 est relié à au moins un autre dispositif de calage 22, éventuellement à deux dispositifs de calage 22, par une liaison rigide 34. Chaque liaison rigide 34 comprend, par exemple, un tube rigide creux, et le boîtier 28 de chaque dispositif de calage 22 comprend au moins un tenon 36 pouvant être emmanché dans le tube 34. En figure 3, chaque dispositif de calage 22 est représenté avec deux tenons 36 disposés de part et d'autre du boîtier 28, de sorte que les dispositifs de calage 22 peuvent être reliés les uns aux autres pour former une file de dispositifs de calage 22. Les tubes rigides 34 peuvent avoir des longueurs différentes pour permettre d'adapter la disposition des dispositifs de calage 22 aux charges 10 sur lesquelles ils reposent.

Selon un autre mode de réalisation, les dispositifs de calage 22 peuvent ne pas être alignés, mais suivre une ligne brisée, le boîtier 28 de chaque dispositif de calage 22 pouvant alors comprendre plusieurs tenons à différents emplacements pour permettre le montage de chaque dispositif de calage 22 avec un ou deux dispositifs de calage selon plusieurs configurations différentes.

Chaque dispositif de calage 22 comprend une vis d'entraînement, non visible en figure 3, logée dans partie 38 du boîtier 28 qui, lorsqu'elle est mise en rotation permet l'actionnement du vérin mécanique du dispositif de calage 22. Le système de calage 20 comprend un mécanisme 40 de commande simultanée des dispositifs de calage 22. Selon un mode de réalisation, le mécanisme de commande 40 comprend un arbre 44 rigide d'axe D qui s'étend au travers de chaque vis d'entraînement et est adapté à entraîner en rotation les vis d'entraînement. Selon un autre mode de réalisation, le mécanisme 40 de commande comprend plusieurs arbres, chaque arbre reliant la vis d'entraînement de l'un des dispositifs de calage 22 à la vis d'entraînement d'un autre dispositif de calage. Le mécanisme 40 de commande peut comprendre des dispositifs mécaniques de couplage, par exemple des joints de cardan ou des joints homocinétiques, l'arbre 44 étant remplacé par des arbres successifs reliés entre eux par les dispositifs mécaniques de couplage. Ceci permet de compenser des désalignements entre les vis d'entraînement des dispositifs de calage 22 dans le cas où les dispositifs de calage 22 sont alignés ou de relier les vis d'entraînement des dispositifs de calage 22 entre elles dans le cas où les dispositifs de calage 22 ne sont pas alignés.

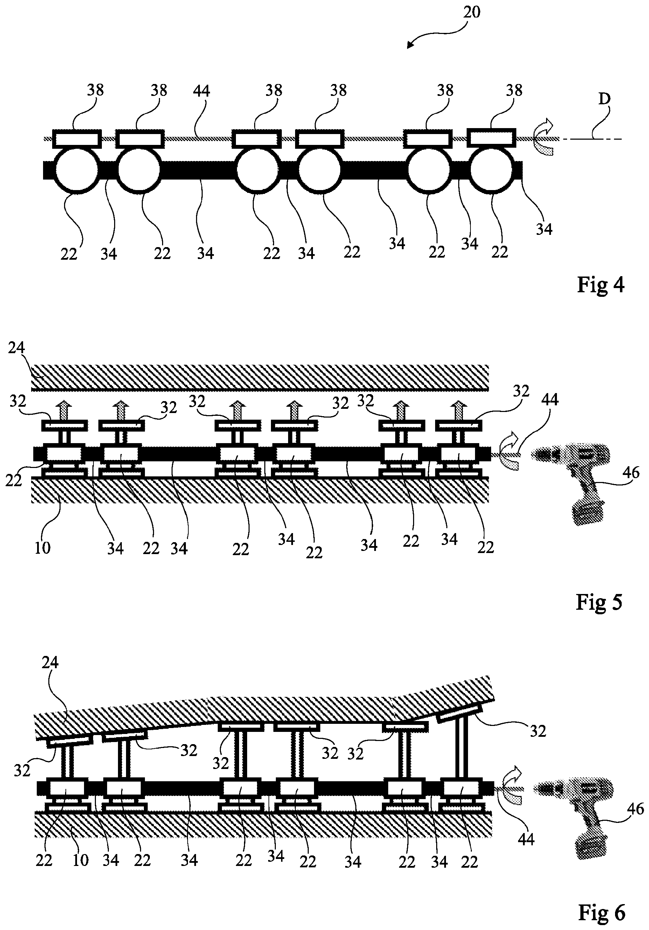

Les figures 4 et 5 illustrent le fonctionnement du système de calage 20 représenté en figure 3. Un opérateur utilise un outil 46, par exemple une clé mécanique ou une visseuse équipée d'une douille de forme complémentaire, pour mettre en rotation l'arbre 44. Toutes les vis d'entraînement des dispositifs de calage 22 sont actionnées simultanément. Les plateaux 32 des dispositifs de calage 22 sont alors déplacés simultanément.

Selon un mode de réalisation, chaque dispositif de calage 22 comprend un mécanisme d'arrêt automatique du déplacement du plateau 32 lorsque les efforts exercés par le plateau 32 sur le plafond 24 dépassent un seuil. Ce mécanisme d'arrêt n'empêche toutefois pas la rotation de l'arbre 44.

La figure 6 illustre le cas où les déplacements des plateaux 32 des dispositifs de calage 22 ne sont pas les mêmes. En outre, comme cela est représenté en figure 6, les plateaux 32 peuvent être articulés de façon à s'incliner en fonction de l'orientation de la surface contre laquelle ils viennent en appui.

Les caractéristiques des éléments filetés contenus dans le dispositif de calage 22 sont choisies pour que le dispositif de calage 22 ne soit pas réversible, c'est-à-dire qu'une rotation de l'arbre 44 entraîne une translation du plateau 32 mais qu'une translation du plateau 32 n'entraîne pas une rotation de l'arbre 44. Ceci permet, de façon avantageuse, d'éviter une mise en rotation non souhaitée de l'arbre 44, par exemple lorsqu'un choc est exercé sur le plateau 32.

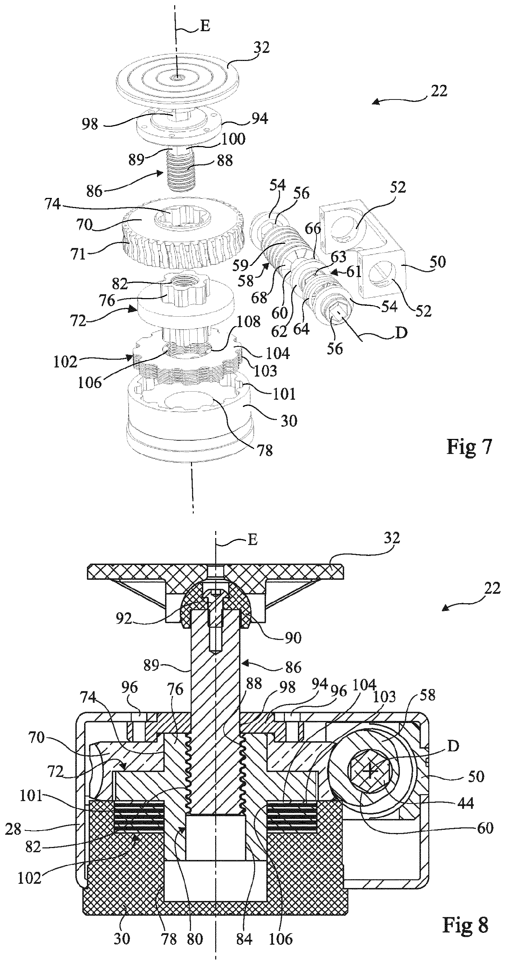

Les figures 7 et 8 représentent un mode de réalisation du dispositif de calage 22, le boîtier 28 n'étant pas représenté en figure 7.

Le dispositif de calage 22 comprend un support 50 fixé au boîtier 28 comprenant deux ouvertures cylindriques 52 à base circulaire d'axe D. Un palier 54 est monté de façon pivotante dans chaque ouverture 52. Chaque palier 54 est traversé par une ouverture 56 à base hexagonale. L'arbre 44, représenté seulement en figure 8, passe par les ouvertures 56 et a une forme complémentaire de celle des ouvertures 56, par exemple une section droite hexagonale, de façon que la mise en rotation de l'arbre 44 autour de l'axe D entraîne la rotation de chaque palier 54 autour de l'axe D.

Le dispositif de calage 22 comprend, en outre, une vis sans fin 58 d'axe D, correspondant à la vis d'entraînement décrite précédemment, comprenant un filetage externe 59, traversée par une ouverture 60 cylindrique à base circulaire dans laquelle s'étend l'arbre 44. La vis sans fin 58 est montée libre en rotation autour de l'arbre 44. Le dispositif de calage 22 comprend un mécanisme de limitation de couple et de découplage 61 comprenant un crabot 62 disposé d'un côté de la vis sans fin 58. Le crabot 62 est traversé par une ouverture 63 à base hexagonale ayant une forme complémentaire de l'arbre 44, de façon que la mise en rotation de l'arbre 44 autour de l'axe D entraîne la rotation du crabot 62 autour de l'axe D. Le crabot 62 est monté selon une liaison glissière sur l'arbre 44 selon l'axe D. Le mécanisme de découplage 61 comprend un ressort 64, interposé entre le crabot 62 et l'un des paliers 54, qui maintient en appui le crabot 62 contre un côté de la vis sans fin 58, l'autre côté de la vis sans fin 58 venant au contact de l'autre palier 54. Le crabot 62 comprend des dents 66, par exemple des dents hélicoïdales, du côté en vis-à-vis de la vis sans fin 58. La vis sans fin 58 comprend des dents 68 du côté en vis-à-vis du crabot 62. Les dents 66 et 68 ont des formes complémentaires.

Le dispositif de calage 22 comprend, en outre, une roue dentée 70 d'axe E entraînée en rotation par la vis sans fin 58. La roue 70 comprend une denture externe 71 engrenant en permanence avec le filetage 59 de la vis sans fin 58. Le dispositif de calage 22 comprend, en outre, un écrou 72 monté libre en rotation autour de l'axe E par rapport au pied 30. La roue 70 entraîne en rotation l'écrou 72 autour de l'axe E. L'écrou 72 est en liaison glissière avec la roue 70 selon l'axe E. Dans ce but, la roue 70 peut être traversée par une ouverture 74 d'axe D à base non circulaire, par exemple ondulée, et l'écrou 72 peut comprendre un corps 76 dont une partie est disposée dans l'ouverture 74 et dont la forme est complémentaire de celle de l'ouverture 74. Le pied 30 peut comprendre un évidement 78 à base circulaire dans lequel est monté le corps 76 de façon pivotante. L'écrou 72 est traversé par une ouverture 80 circulaire d'axe E qui comprend une portion filetée 82, du côté du plateau 32, et une portion lisse 84 du côté du pied 30. Le dispositif de calage 22 comprend, en outre, une tige 86 d'axe E qui comprend une portion filetée 88, du côté du pied 30, se prolongeant par une portion lisse 89, du côté du plateau 32, la portion filetée 88 coopérant avec la portion filetée 82 de l'ouverture 80 de l'écrou 72. Le plateau 32 est relié à l'extrémité de la tige 86 opposé à l'écrou 72 par une liaison rotule 90, un élément de la liaison rotule 90 étant fixé à la tige 86 par une vis 92. Un ressort non représenté est prévu entre le pied 30 et l'extrémité inférieure de la tige 86.

Le dispositif de calage 22 comprend, en outre, un flasque 94 fixé au boîtier 28 par des vis 96 et traversé par une ouverture 98 pour le passage de la tige 86. La tige 86 est montée selon une liaison glissière selon l'axe E par rapport au flasque 94. Dans ce but, la portion lisse 89 de la tige 86 peut comprendre un méplat 100 et l'ouverture 98 peut avoir une forme complémentaire de celle de la portion lisse 89.

Selon un mode de réalisation, le mécanisme de limitation de couple 61 comprend, en outre, un mécanisme d'embrayage 102 logé dans un évidement 101 prévu dans le pied 30. Le mécanisme d'embrayage 102 est formé par un empilement de disques 103 intercalés avec des disques 104. Les disques 103 et 104 sont montés selon une liaison glissière selon l'axe E par rapport au pied 30 et à l'écrou 72. Toutefois, les disques 103 sont solidaires en rotation autour de l'axe E par rapport à l'écrou 72 et les disques 104 sont solidaires en rotation autour de l'axe E par rapport au pied 30. Dans ce but, selon un mode de réalisation, chaque disque 103 a un bord externe circulaire et est traversé par une ouverture 106 dans laquelle s'étend le corps 76 de l'écrou 72 et qui a une forme complémentaire de celle du corps 76. En outre, l'évidement 101 est à base non circulaire, par exemple ondulée, et chaque disque 104 a un bord externe de forme complémentaire de celle de l'évidement 101 et est traversé par une ouverture 108 dans laquelle le corps 76 est monté libre en rotation.

Le fonctionnement du dispositif de calage 22 est le suivant. La mise en rotation de l'arbre 44 autour de l'axe D dans un premier sens de rotation entraîne la rotation de la vis sans fin 58 dans le même sens de rotation par frottement des dents 66 du crabot 62 contre les dents 68 latérales de la vis sans fin 58. La rotation de la vis sans fin 58 entraîne la rotation de la roue 70 et de l'écrou 72 autour de l'axe E dans un premier sens de rotation. Ceci entraîne un déplacement de la tige 86 le long de l'axe E, par coopération de la portion lisse 89 et du flasque 94, de façon à éloigner le plateau 32 du boîtier 28.

Lorsque le plateau 32 vient au contact d'un obstacle, l'effort qui s'oppose au déplacement du plateau 32 se traduit par une augmentation du couple résistif qu'oppose la vis sans fin 58 à son entraînement en rotation par le crabot 62. Si ce couple résistif est supérieur au couple d'entraînement dû aux frottements entre les dents 66 du crabot 62 contre les dents 68 de la vis sans fin 58, les dents 66 du crabot 62 glissent sur les dents 68 latérales de la vis sans fin 58 et la vis sans fin 58 n'est plus entraînée en rotation par l'arbre 44. Le déplacement du plateau 32 est alors interrompu. L'arbre 44 peut néanmoins continuer à actionner d'autres dispositifs de calage 22 auxquels il est relié.

L'interruption du déplacement du plateau 32 peut être obtenue pour des efforts relativement faibles du plateau 32 contre le plafond 24 et donc empêcher toute détérioration de la charge 10 sur laquelle repose le dispositif de calage 22. En effet, lorsque le plateau 32 vient au contact d'un obstacle, la tige 86 transmet un effort à l'écrou 72 qui entraîne la mise en appui des disques 103 contre les disques 104. Une augmentation brutale du couple d'entraînement nécessaire pour faire tourner l'écrou 72 et donc la vis sans fin 58 est donc obtenue, par exemple à des valeurs de l'ordre de 5 Nm à 10 Nm. Ceci favorise le glissement du crabot 62 par rapport à la vis sans fin 58. Si le mécanisme d'embrayage 102 n'était pas présent, il faudrait que le crabot 62 glisse sur la vis sans fin 58 pour un faible couple résistif qui pourrait être facilement atteint de façon indésirable, par exemple en raison d'effets dynamiques dus à la vitesse de rotation élevée de la visseuse entraînant en rotation l'arbre 44.

La mise en rotation de l'arbre 44 autour de l'axe D dans le deuxième sens de rotation opposé au premier sens de rotation entraîne la rotation de la vis sans fin 58 dans le deuxième sens de rotation puisque les dents 66 du crabot 62 engrènent avec les dents 68 de la vis sans fin 58. La rotation de la vis sans fin 58 entraîne la rotation de la roue 70 et de l'écrou 72 autour de l'axe E dans le deuxième sens de rotation. Ceci entraîne un déplacement de la tige 86 le long de l'axe E, par coopération de la portion lisse 89 et du flasque 94, de façon à rapprocher le plateau 32 du boîtier 28. Lorsque le plateau 32 est suffisamment rapproché du boîtier 28, la portion filetée 88 de la tige 86 désengrène de la portion filetée 82 de l'ouverture 80 de l'écrou 76. Le déplacement du plateau 32 est alors interrompu. Le ressort, non représenté, prévu entre le pied 30 et l'extrémité inférieure de la tige 86 permet de garder la portion filetée 88 de la tige 86 plaquée contre la portion filetée 82 de l'ouverture 80 pour assurer que la portion filetée 88 de la tige 86 engrène à nouveau avec la portion filetée 82 de l'ouverture 80 à la prochaine montée du plateau 32.

Ceci permet, lorsque plusieurs dispositifs 22 sont entraînés en rotation simultanément par un mécanisme d'entraînement 40, que les plateaux 32 des dispositifs 22 s'arrêtent les uns après les autres alors que l'entraînement des dispositifs 22 n'est pas interrompu.

Le pas des filetages de la vis sans fin 58, de la portion filetée 82 de l'ouverture 80 et de la portion filetée 88 de la tige 86 et les coefficients de frottement entre les matériaux composant la vis sans fin 58, l'écrou 76 et la tige 86 sont choisis pour que le dispositif de calage 22 ne soit pas réversible.

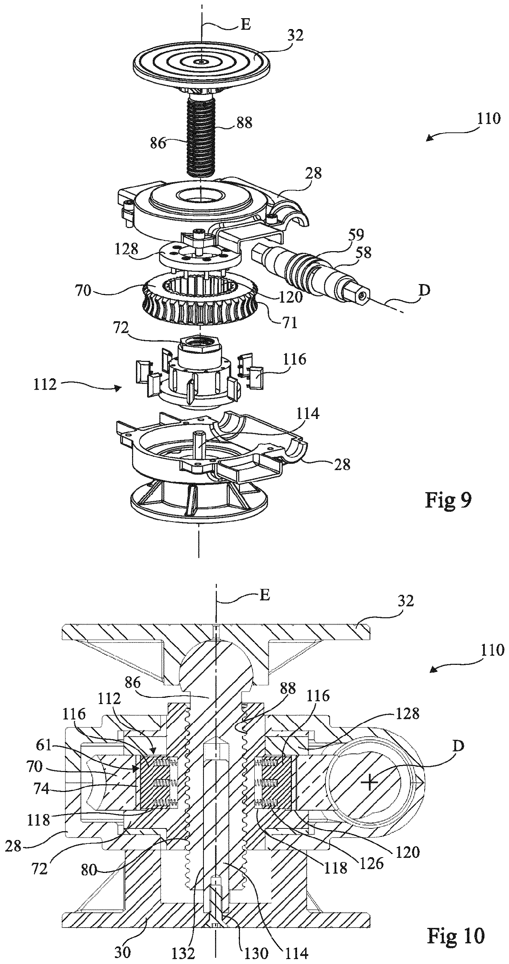

Les figures 9 à 12 représentent un autre mode de réalisation d'un dispositif de calage 110. Le dispositif de calage 110 comprend l'ensemble des éléments du dispositif de calage 20 à la différence que le mécanisme de limitation de couple 61 est remplacé par un mécanisme de limitation de couple 112 disposé entre la roue 70 et l'écrou 72, que la tige 86 est filetée sur toute sa longueur, que l'ouverture 80 de l'écrou 72 est filetée sur toute sa longueur et que la fonction remplie par le flasque 94 du dispositif de calage 20 est remplie par un pion 114. Sur les figures 9 à 11, la vis sans fin 58 et l'arbre 44 sont une seule pièce mécanique. A titre de variante, la vis sans fin 58 et l'arbre 44 peuvent être deux pièces distinctes, la vis sans fin 58 étant entraînée directement en rotation autour de l'axe D par l'arbre 44.

Selon un mode de réalisation, l'écrou 72 entraîne en rotation autour de l'axe E des doigts 116. Chaque doigt 116 est partiellement logé dans un évidement 118 formé dans l'écrou 72 et est susceptible de coulisser radialement par rapport à l'écrou 72. L'extrémité de chaque doigt 116 forme une dent 119 ayant deux faces 122, 124 biseautées. L'ouverture centrale 74 de la roue 70 comprend une denture 120 sur laquelle peuvent engrener les doigts 116. Des ressorts 126 sont disposés dans chaque évidement 118 et poussent en permanence le doigt 116 associé contre la denture 120.

Dans le mode de réalisation représenté sur les figures 9 à 12, pour permettre le montage du dispositif de calage 110, le boîtier 28 est en deux parties. En outre, la roue 70 est prise en sandwich entre l'écrou 72 et une pièce 128 solidaire de l'écrou 72 en rotation autour de l'axe E. Le pion 114 est fixé au pied 30 par une vis 130. La tige 86 comprend une ouverture 132 non traversante d'axe E à section non circulaire dans laquelle est logé le pion 114. La forme extérieure du pion 114 est complémentaire de celle de l'ouverture 132.

Le fonctionnement du dispositif de calage 110 est le suivant. La mise en rotation de la vis sans fin 58 autour de l'axe D selon un premier sens de rotation entraîne la rotation de la roue 70 autour de l'axe E selon un premier sens de rotation. La rotation de la roue 70 entraîne la rotation de l'écrou 72 autour de l'axe E dans le premier sens de rotation par frottement des faces 122 des doigts 116 contre la denture 120. Ceci entraîne un déplacement de la tige 86 le long de l'axe E, par coopération du pion 114 et de l'ouverture 132, de façon à éloigner le plateau 32 du boîtier 28.

Lorsque le plateau 32 vient au contact d'un obstacle, l'effort qui s'oppose au déplacement du plateau 32 se traduit par un couple résistif qui s'oppose à la rotation de l'écrou 72. Si ce couple résistif est supérieur au couple d'entraînement dû aux frottements entre les faces 122 des doigts 116 contre la denture 120, les doigts 116 glissent sur la denture 120 et l'écrou 72 n'est plus entraîné en rotation par la roue 70. Le déplacement du plateau 32 est alors interrompu. L'actionnement des autres dispositifs de calage 110 du système de calage peuvent néanmoins se poursuivre.

La mise en rotation de la vis sans fin 58 autour de l'axe D dans le deuxième sens de rotation opposé au premier sens de rotation entraîne la rotation de la roue 70 autour de l'axe E dans le deuxième sens de rotation. La rotation de la roue 70 entraîne la rotation de l'écrou 72 autour de l'axe E dans le deuxième sens de rotation par frottement des faces 124 des doigts 116 contre la denture 120. Ceci entraîne un déplacement de la tige 86 le long de l'axe E, par coopération du pion 114 et de l'ouverture 132, de façon à rapprocher le plateau 32 du boîtier 28.

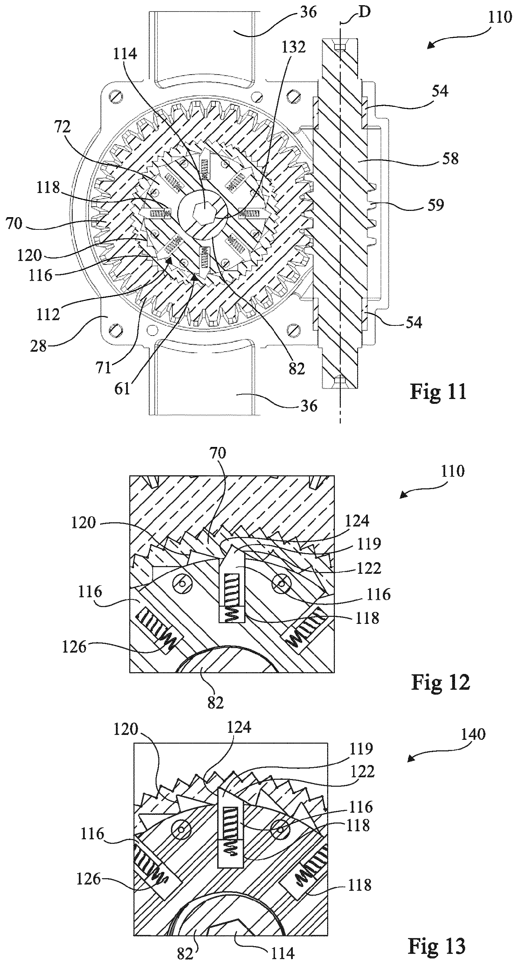

Comme cela apparaît en figure 12, les inclinaisons des faces 122, 124 par rapport à un plan médian du doigt 116 contenant l'axe E ne sont pas égales de sorte que les frottements des faces 124 contre la denture 120 lorsque la roue 70 tourne dans le deuxième sens de rotation sont plus importants que les frottements des faces 122 contre la denture 120 lorsque la roue 70 tourne dans le premier sens de rotation. Cela permet d'appliquer un couple plus important à la tige 86 pour amorcer la descente du plateau 32 depuis la position haute. En outre, lorsque que la tige 86 vient en position basse au contact du boîtier 28, les faces 124 peuvent glisser par rapport à la denture 120 de la roue 70 de sorte que la roue 70 n'entraîne plus en rotation l'écrou 72.

Le pas des filetages de la vis sans fin 58, de l'ouverture 80 et de la tige 86 et les coefficients de frottement entre les matériaux composant ces pièces sont choisis pour que le dispositif de calage 110 ne soit pas réversible.

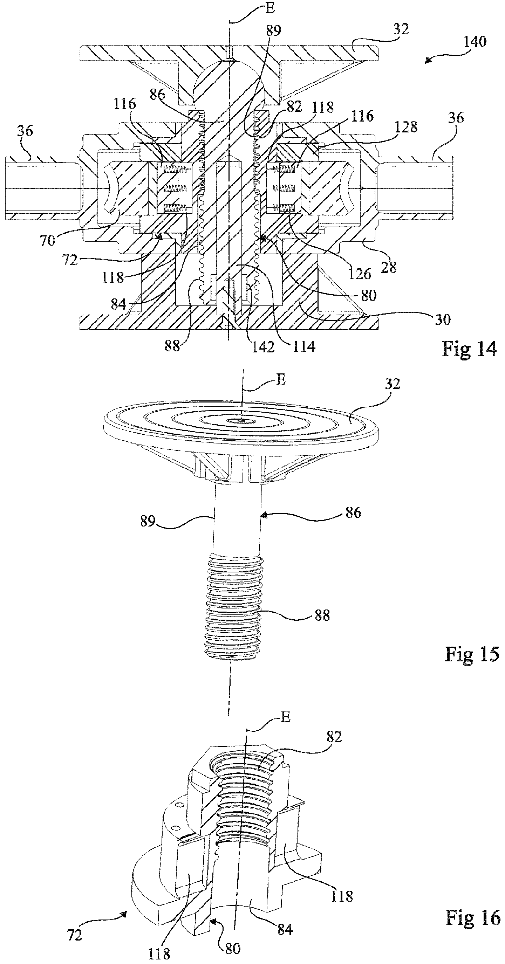

Les figures 13 à 16 représentent un autre mode de réalisation d'un dispositif de calage 140. Le dispositif de calage 140 comprend l'ensemble des éléments du dispositif de calage 110 à la différence que, pour chaque doigt 116, la face 124 s'étend parallèlement au plan médian du doigt 116 contenant l'axe E et que la tige 86 comprend une portion filetée 88 et une portion non filetée 89, comme le dispositif de calage 20 représenté sur les figures 7 et 8, et que l'ouverture 80 comprend une portion filetée 82 et une portion non filetée 84 comme le dispositif de calage 20. Un ressort non représenté est prévu entre le pied 30 et l'extrémité inférieure de la tige 86 et peut être disposé dans un logement 142 prévu à l'extrémité inférieure de la tige 86.

Le fonctionnement du dispositif de calage 140 pour la montée du plateau 32 est identique à ce qui a été décrit précédemment pour le dispositif de calage 110. Le fonctionnement du dispositif de calage 140 pour la descente du plateau 32 est identique à ce qui a été décrit précédemment pour le dispositif de calage 20. En particulier, lorsque le plateau 32 est suffisamment rapproché du boîtier 28, la portion filetée 88 de la tige 86 désengrène de la portion filetée 82 de l'ouverture 80 de l'écrou 72. Le déplacement du plateau 32 est alors interrompu. Le ressort, non représenté, prévu entre le pied 30 et l'extrémité inférieure de la tige 86 permet de garder la portion filetée 88 de la tige 86 plaquée contre la portion filetée 82 de l'ouverture 80 pour assurer que la portion filetée 88 de la tige 86 engrène avec la portion filetée 82 de l'ouverture 80 à la prochaine montée du plateau.

## Revendications

1. Système de calage comprenant plusieurs dispositifs de calage (22 ; 110 ; 140), chaque dispositif de calage comprenant une vis sans fin (58) coopérant avec une roue dentée (70), un écrou (72) relié à la roue dentée et comprenant une première ouverture (80) au moins en partie filetée, une tige (86) au moins en partie filetée coopérant avec la première ouverture, un plateau (32) relié à la tige et un mécanisme de limitation de couple (61) entre la roue et l'écrou ou entre un arbre d'entraînement (44) et la vis sans fin, dans lequel les vis sans fin (58) des dispositifs de calage (22) sont entraînées en rotation simultanément par un mécanisme d'entraînement (40).

2. Système de calage selon la revendication 1, dans lequel, pour chaque dispositif de calage (22 ; 110 ; 140), la vis sans fin (58) est adaptée à être entraînée dans un premier sens de rotation, d'où il résulte un déplacement du plateau (32) dans une première direction, et est adaptée à être entraînée dans un deuxième sens de rotation opposé au premier sens de rotation, d'où il résulte un déplacement du plateau (32) dans une deuxième direction opposée à la première direction.

3. Système de calage selon la revendication 2, dans lequel, pour chaque dispositif de calage (110 ; 140), le mécanisme de limitation de couple (61) est adapté pour transmettre un premier moment à l'écrou (70) lorsque la vis sans fin (58) est entraînée dans le premier sens de rotation par un deuxième moment et pour transmettre un troisième moment à l'écrou lorsque la vis sans fin (58) est entraînée dans le deuxième sens de rotation par un quatrième moment, l'intensité en valeur absolue du deuxième moment étant supérieure à l'intensité en valeur absolue du premier moment pour une même intensité en valeur absolue des deuxième et troisième moments.

4. Système de calage selon la revendication 2 ou 3, dans lequel, pour chaque dispositif de calage (22 ; 110 ; 140), la tige (86) est adaptée pour se désolidariser de l'écrou (70) lorsque le plateau (32) est déplacé dans la deuxième direction au-delà d'une position donnée.

5. Système de calage selon la revendication 4, dans lequel, pour chaque dispositif de calage (22 ; 110 ; 140), la tige (86) est adaptée pour coopérer à nouveau avec l'écrou (70) après que le plateau (32) a été déplacé dans la deuxième direction au-delà de la position donnée lorsque la vis sans fin (58) est entraînée dans le premier sens de rotation.

6. Système de calage selon l'une quelconque des revendications 1 à 5, dans lequel chaque dispositif de calage (110 ; 140) comprend une pièce (98 ; 114) formant une liaison glissière avec la tige (86).

7. Système de calage selon l'une quelconque des revendications 1 à 6, dans lequel la liaison entre la vis sans fin (58) et la roue dentée (70) et/ou entre la tige (86) et l'écrou (72) est une liaison irréversible.

8. Système de calage selon l'une quelconque des revendications 1 à 7, dans lequel le mécanisme de limitation de couple (61) comprend un crabot (62) entraîné en rotation par l'arbre d'entraînement (44) et comprenant des premières dents (66), et dans lequel la vis sans fin (68) comprend, sur un côté, des deuxièmes dents (68), complémentaires des premières dents, les deuxièmes dents étant adaptées à glisser sur les premières dents dans un sens de rotation lorsque le couple résistif de la vis sans fin est supérieur à un seuil.

9. Système de calage selon la revendication 8, comprenant un premier ressort (64) exerçant en permanence une poussée sur le crabot (62) contre la vis sans fin (58).

10. Système de calage selon l'une quelconque des revendications 1 à 7, dans lequel la roue (70) comprend une première denture (71) coopérant avec la vis sans fin (58) et est traversée par une deuxième ouverture (74) comprenant une deuxième denture (120), l'écrou (72) s'étendant dans la deuxième ouverture, le mécanisme de limitation de couple (61) comprenant des doigts (116) disposés radialement par rapport à l'écrou, chaque doigt comprenant des troisièmes dents (119), complémentaires de la deuxième denture, les troisièmes dents étant adaptées à glisser sur la deuxième denture dans un sens de rotation lorsque le couple résistif de l'écrou est supérieur à un seuil.

11. Système de calage selon la revendication 10, comprenant, pour chaque doigt (116), au moins un deuxième ressort (126) exerçant en permanence une poussée sur le doigt contre la deuxième denture (120).

12. Système de calage selon l'une quelconque des revendications 1 à 11, dans lequel la première ouverture (80) comprend une première portion filetée (82) et une deuxième portion non filetée (84), et la tige (86) comprend une troisième portion filetée (88) et une quatrième portion non filetée (89), et dans lequel la troisième portion filetée n'engrène plus avec la première portion filetée lorsque le plateau (32) est au plus proche de l'écrou (72).

13. Système de calage selon la revendication 12, comprenant un troisième ressort adapté à exercer une poussée sur la tige (86).

14. Système de calage selon l'une quelconque des revendications 1 à 13, comprenant un pied (30) et une alternance de premiers et deuxièmes disques (103, 104), chaque premier disque (103) étant solidaire en rotation du pied et chaque deuxième disque (104) étant solidaire en rotation de l'écrou (72), les premiers disques étant adaptés à venir au contact des deuxièmes disques lorsque le plateau (32) rencontre un obstacle (24).

15. Système de calage (20) selon l'une quelconque des revendications 1 à 14, dans lequel au moins deux des dispositifs de calage (22) sont reliés l'un à l'autre par une liaison rigide (34) .

16. Système de calage selon la revendication 15, dans lequel tous les dispositifs de calage (22) sont reliés les uns aux autres par des liaisons rigides (34).

17. Procédé de calage de charges (10) comprenant la mise en place du système de calage (20) selon l'une quelconque des revendications 1 à 16 entre les charges et une paroi (24) et l'actionnement simultané des dispositifs de calage jusqu'à ce que le plateau (32) de chaque dispositif de calage vienne au contact de la paroi (24).

## Patentansprüche

1. Verspannungssystem mit einer Vielzahl von Verspannungsvorrichtungen (22; 110; 140), wobei jede Verspannungsvorrichtung Folgendes aufweist: eine Endlosschraube (58), die mit einem Zahnrad (70) zusammenwirkt, eine Mutter (72), die mit dem Zahnrad gekoppelt ist und eine erste, zumindest teilweise mit einem Gewinde versehene Öffnung (80) aufweist, eine zumindest teilweise mit einem Gewinde versehene Stange (86), die mit der ersten Öffnung zusammenwirkt, eine mit der Stange gekoppelte Platte (32) und einen drehmomentbegrenzenden Mechanismus (61) zwischen dem Rad und der Mutter oder zwischen einer Antriebswelle (44) und der Endlosschraube, wobei die Endlosschrauben (58) der Verspannungsvorrichtungen (22) gleichzeitig durch einen Antriebsmechanismus (40) gedreht werden.

2. Verspannungssystem nach Anspruch 1, wobei für jede Verspannungsvorrichtung (22; 110; 140) die Endlosschraube (58) in einer ersten Drehrichtung angetrieben werden kann, wodurch die Platte (32) in einer ersten Richtung verschoben wird, und in einer zweiten Drehrichtung entgegengesetzt zur ersten Drehrichtung angetrieben werden kann, wodurch die Platte (32) in einer zweiten Richtung entgegengesetzt zur ersten Richtung verschoben wird.

3. Verspannungssystem nach Anspruch 2, wobei für jede Verspannungsvorrichtung (110; 140) der drehmomentbegrenzende Mechanismus (61) in der Lage ist, ein erstes Moment auf die Mutter (70) zu übertragen, wenn die Endlosschraube (58) in der ersten Drehrichtung um ein zweites Moment angetrieben wird, und ein drittes Moment auf die Mutter zu übertragen, wenn die Endlosschraube (58) in der zweiten Drehrichtung um ein viertes Moment angetrieben wird, wobei die Intensität des Absolutwerts des zweiten Moments größer ist als die Intensität des Absolutwerts des ersten Moments für eine gleiche Intensität des Absolutwerts des zweiten und dritten Moments.

4. Verspannungssystem nach Anspruch 2 oder 3, wobei für jede Verspannungsvorrichtung (22; 110; 140) die Stange (86) in der Lage ist, sich von der Mutter (70) zu lösen, wenn die Platte (32) in der zweiten Richtung über eine bestimmte Position hinaus verschoben wird.

5. Verspannungssystem nach Anspruch 4, wobei für jede Verspannungsvorrichtung (22; 110; 140) die Stange (86) in der Lage ist, wieder mit der Mutter (70) zusammenzuwirken, nachdem die Platte (32) in der zweiten Richtung über die gegebene Position hinaus verschoben wurde, wenn die Endlosschraube (58) in der ersten Drehrichtung angetrieben wird.

6. Verspannungssystem nach einem der Ansprüche 1 bis 5, wobei jede Verspannungsvorrichtung (110; 140) einen Teil (98; 114) aufweist, der eine Gleitverbindung mit der Stange (86) bildet.

7. Verspannungssystem nach einem der Ansprüche 1 bis 6, wobei die Verbindung zwischen der Endlosschraube (58) und dem Zahnrad (70) und/oder zwischen der Stange (86) und der Mutter (72) eine irreversible Verbindung ist.

8. Verspannungssystem nach einem der Ansprüche 1 bis 7, wobei der drehmomentbegrenzende Mechanismus (61) einen Mitnehmer (62) aufweist, der von der Antriebswelle (44) gedreht wird und erste Zähne (66) aufweist, und wobei die Endlosschraube (68) auf einer Seite zweite Zähne (68) umfasst, die zu den ersten Zähnen komplementär sind, wobei die zweiten Zähne in der Lage sind, auf den ersten Zähnen in einer Drehrichtung zu gleiten, wenn das Widerstandsdrehmoment der Endlosschraube größer als ein Schwellenwert ist.

9. Verspannungssystem nach Anspruch 8, die eine erste Feder (64) aufweist, die den Mitnehmer (62) permanent gegen die Endlosschraube (58) drückt.

10. Verspannungssystem nach einem der Ansprüche 1 bis 7, wobei das Zahnrad (70) eine erste Verzahnung (71) aufweist, die mit der Endlosschraube (58) zusammenwirkt, und von einer zweiten Öffnung (74) durchquert wird, die eine zweite Verzahnung (120) aufweist, wobei sich die Mutter (72) in die zweite Öffnung erstreckt, wobei der drehmomentbegrenzende Mechanismus (61) Finger (116) aufweist, die radial in Bezug auf die Mutter angeordnet sind, wobei jeder Finger eine dritte Verzahnung (119) aufweist, die komplementär zu der zweiten Verzahnung ist, wobei die dritte Verzahnung in der Lage ist, auf der zweiten Verzahnung in einer Drehrichtung zu gleiten, wenn das Widerstandsdrehmoment der Mutter größer als ein Schwellenwert ist.

11. Verspannungssystem nach Anspruch 10, das für jeden Finger (116) mindestens eine zweite Feder (126) aufweist, die den Finger permanent gegen die zweiten Zähne (120) drückt.

12. Verspannungssystem nach einem der Ansprüche 1 bis 11, wobei die erste Öffnung (80) einen ersten Gewindeabschnitt (82) und einen zweiten gewindelosen Abschnitt (84) aufweist, und die Stange (86) einen dritten Gewindeabschnitt (88) und einen vierten gewindelosen Abschnitt (89) umfasst, und wobei der dritte Gewindeabschnitt nicht mehr mit dem ersten Gewindeabschnitt kämmt, wenn die Platte (32) der Mutter (72) am nächsten ist.

13. Verspannungssystem nach Anspruch 12, das eine dritte Feder aufweist, die auf die Stange (86) drücken kann.

14. Verspannungssystem nach einem der Ansprüche 1 bis 13, wobei das System einen Fuß (30) und abwechselnd erste und zweite Scheiben (103, 104) aufweist, wobei sich jede erste Scheibe (103) mit dem Fuß und jede zweite Scheibe (104) mit der Mutter (72) dreht, wobei die ersten Scheiben mit den zweiten Scheiben in Kontakt kommen können, wenn die Platte (32) auf ein Hindernis (24) trifft.

15. Verspannungssystem (20) nach einem der Ansprüche 1 bis 14, wobei mindestens zwei der Verspannungsvorrichtungen (22) durch eine starre Verbindung (34) miteinander gekoppelt sind.

16. Verspannungssystem nach Anspruch 15, wobei alle Verspannungsvorrichtungen (22) durch starre Verbindungen (34) miteinander gekoppelt sind.

17. Verfahren zum Verspannen von Lasten (10), bei dem das Verspannungssystem (20) nach einem der Ansprüche 1 bis 16 zwischen den Lasten und einer Wand (24) installiert wird und die Verspannungsvorrichtungen gleichzeitig betätigt werden, bis die Platte (32) jeder Verspannungsvorrichtung in Kontakt mit der Wand (24) kommt.

## Claims

1. A bracing system comprising a plurality of bracing devices (22; 110; 140), each bracing device comprising an endless screw (58) cooperating with a toothed wheel (70), a nut (72) coupled to the toothed wheel and comprising a first at least partly threaded opening (80), an at least partly threaded rod (86) cooperating with the first opening, a plate (32) coupled to the rod, and a torque-limiting mechanism (61) between the wheel and the nut or between a drive shaft (44) and the endless screw, wherein the endless screws (58) of the bracing devices (22) are simultaneously rotated by a drive mechanism (40).

2. The bracing system of claim 1, wherein, for each bracing device (22; 110; 140), the endless screw (58) is capable of being driven in a first rotation direction, whereby the plate (32) is displaced in a first direction, and is capable of being driven in a second rotation direction opposite to the first rotation direction, whereby the plate (32) is displaced in a second direction opposite to the first direction.

3. The bracing system of claim 2, wherein, for each bracing device (110; 140), the torque-limiting mechanism (61) is capable of transmitting a first moment to the nut (70) when the endless screw (58) is driven in the first rotation direction by a second moment and to transmit a third moment to the nut when the endless screw (58) is driven in the second rotation direction by a fourth moment, the intensity in absolute value of the second moment being greater than the intensity in absolute value of the first moment for a same intensity in absolute value of the second and third moments.

4. The bracing system of claim 2 or 3, wherein, for each bracing device (22; 110; 140), the rod (86) is capable of disengaging from the nut (70) when the plate (32) is displaced in the second direction beyond a given position.

5. The bracing system of claim 4, wherein, for each bracing device (22; 110; 140), the rod (86) is capable of cooperating again with the nut (70) after the plate (32) has been displaced in the second direction beyond the given position when the endless screw (58) is driven in the first rotation direction.

6. The bracing system of any of claims 1 to 5, wherein each bracing device (110; 140) comprises a part (98; 114) forming a slide joint with the rod (86).

7. The bracing system of any of claims 1 to 6, wherein the joint between the endless screw (58) and the toothed wheel (70) and/or between the rod (86) and the nut (72) is an irreversible joint.

8. The bracing system of any of claims 1 to 7, wherein the torque-limiting mechanism (61) comprises a dog (62) rotated by the drive shaft (44) and comprising first teeth (66), and wherein the endless screw (68) comprises, on one side, second teeth (68), complementary to the first teeth, the second teeth being capable of sliding on the first teeth in a rotation direction when the resistive torque of the endless screw is greater than a threshold.

9. The bracing system of claim 8, comprising a first spring (64) permanently pushing the dog (62) against the endless screw (58).

10. The bracing system of any of claims 1 to 7, wherein the wheel (70) comprises first teeth (71) cooperating with the endless screw (58) and is crossed by a second opening (74) comprising second teeth (120), the nut (72) extending in the second opening, the torque-limiting mechanism (61) comprising fingers (116) radially arranged with respect to the nut, each finger comprising third teeth (119), complementary to the second teeth, the third teeth being capable of sliding on the second teeth in a rotation direction when the resistive torque of the nut is greater than a threshold.

11. The bracing system of claim 10, comprising, for each finger (116), at least one second spring (126) permanently pushing the finger against the second teeth (120).

12. The bracing system of any of claims 1 to 11, wherein the first opening (80) comprises a first threaded portion (82) and a second non-threaded portion (84), and the rod (86) comprises a third threaded portion (88) and a fourth non-threaded portion (89), and wherein the third threaded portion no longer meshes with the first threaded portion when the plate (32) is at closest to the nut (72).

13. The bracing system of claim 12, comprising a third spring capable of pushing on the rod (86).

14. The bracing system of any of claims 1 to 13, comprising a foot (30) and an alternation of first and second disks (103, 104), each first disk (103) rotating along with the foot and each second disk (104) rotating along with the nut (72), the first disks being capable of coming into contact with the second disks when the plate (32) runs into an obstacle (24).

15. The bracing system (20) of any of claims 1 to 14, wherein at least two of the bracing devices (22) are coupled to each other by a rigid joint (34).

16. The bracing system of claim 15, wherein all the bracing devices (22) are coupled to one another by rigid joints (34) .

17. A load bracing method (10) comprising installing the bracing system (20) of any of claims 1 to 16 between the loads and a wall (24) and simultaneously actuating the bracing devices until the plate (32) of each bracing device comes into contact with the wall (24).
